# EUROPÄISCHE PATENTSCHRIFT

(11) **EP 1 746 280 B1**
(45) Veröffentlichungstag und Bekanntmachung des Hinweises auf die Patenterteilung: **16.03.2011**
(21) Anmeldenummer: 06014902.8
(22) Anmeldetag: 18.07.2006
(51) Int. Cl.: F02M 25/07, F28F 27/02, F16K 29/00, F16K 11/07

(54) **Wärmeübertragerventileinrichtung**
Heat exchanger valve system
Système de soupape pour échangeur de chaleur

(30) Priorität: 19.07.2005 DE 102005034136; 30.08.2005 DE 102005041149
(43) Veröffentlichungstag der Anmeldung: 24.01.2007
(73) Patentinhaber: Behr GmbH & Co. KG, 70469 Stuttgart (DE); Behr Thermot-tronik GmbH, 70806 Kornwestheim (DE)
(72) Erfinder: Buschatz, Immanuel, Dipl.-Ing (FH), 72669 Unterensingen (DE); Friesenhahn, Waldemar, Dipl.-Ing., 70806 Kornwestheim (DE); Klein, Hans-Peter, 71397 Leutenbach (DE); Kunz, Torsten-André, 74395 Mundelsheim (DE); Kunze, Jürgen, Dipl.-Ing. (FH), 71277 Rutesheim (DE); Ruckwied, Jens, Dipl.-Ing., 70195 Stuttgart (DE); Stiegler, Martin, Dipl.-Ing., 73110 Hattenhofen (DE); Willers, Eike, Dr.-Ing., 70469 Stuttgart (DE)
(74) Vertreter: Grauel, Andreas

(56) Entgegenhaltungen:
- EP-A- 0 596 855
- EP-A- 0 987 427
- EP-A- 1 091 113
- EP-A- 1 363 013
- EP-A1- 1 116 908
- WO-A-2005/113972
- WO-A-2006/024495
- DE-A1- 10 321 638
- DE-A1-102004 010 117
- FR-A- 2 827 011
- US-A- 2 498 637
- US-A- 3 353 590
- US-A- 3 760 870
- US-A- 4 236 547
- US-A1- 2005 039 729

## Beschreibung

Die Erfindung betrifft eine Wärmeübertragerventileinrichtung zum Regeln eines Fluidstroms, insbesondere eines Abgas- oder Ladeluftstroms, mit einem Ventilgehäuse, das einen Eingang für den Fluidstrom und einen Wärmeübertragerausgang aufweist, durch den einem Wärmeübertrager, insbesondere einem Kühler, in Abhängigkeit von der Stellung eines Ventilkörpers ein mehr oder weniger großer Fluidstrom zugeführt wird.

In herkömmlichen Abgassystemen wird zum Regeln des Abgasstroms ein Abgasregelventil verwendet. Zum Verteilen des Abgases wird eine Abgasklappe verwendet, die den Abgasstrom entweder durch den Kühler oder durch einen Bypass am Kühler vorbei leitet.

Aufgabe der Erfindung ist es, eine verbesserte Wärmeübertragerventileinrichtung gemäß dem Oberbegriff des Anspruchs 1 zu schaffen, die einfach aufgebaut und kostengünstig herstellbar ist.

Die Aufgabe ist bei einer Wärmeübertragerventileinrichtung zum Regeln eines Fluidstroms, insbesondere eines Abgas- oder Ladeluftstroms, mit einem Ventilgehäuse, das einen Eingang für den Fluidstrom und einen Wärmeübertragerausgang aufweist, durch den einem Wärmeübertrager, insbesondere einem Kühler, in Abhängigkeit von der Stellung eines Ventilkörpers ein mehr oder weniger großer Fluidstrom zugeführt wird, dadurch gelöst, dass das Ventilgehäuse einen weiteren Ausgangs, insbesondere einen Bypassausgang, aufweist, durch den in Abhängigkeit von der Stellung eines Ventilschiebers, der hin und her bewegbar in dem Ventilgehäuse angeordnet ist, ein mehr oder weniger großer Fluidstrom an dem Wärmeübertrager vorbei geleitet wird. Gemäß einem wesentlichen Aspekt der Erfindung werden die Funktionen Regeln und Verteilen des Fluidstroms in einer einzigen Ventileinrichtung zusammengefasst. Mit der erfindungsgemäßen Wärmeübertragerventileinrichtung ist es möglich, den durch den Eingang in das Ventilgehäuse eintretenden Fluidstrom geregelt zu dem Wärmeübertragerausgang oder zu dem Bypassausgang zu leiten. Gemäß einem weiteren Aspekt der Erfindung kann der Eingang mit dem Ventilschieber auch komplett geschlossen werden. Der Ventilschieber kann auch als Ventilkörper bezeichnet werden. Der Ventilschieber wird durch elektrische Steller, insbesondere elektromagnetische Steller, oder durch pneumatische Steller, insbesondere durch mindestens eine Unterdruckdose, betätigt. Die herkömmliche Abgasklappe kann entfallen.

Gemäß der Erfindung umfasst der Ventilschieber einen im Wesentlichen kreiszylinderförmigen Schließkörper. Der Schließkörper ist vorzugsweise in einer Ausnehmung des Ventilgehäuses hin und her bewegbar aufgenommen.

Ein bevorzugtes Ausführungsbeispiel der Wärmeübertragerventileinrichtung ist dadurch gekennzeichnet, dass der Ventilschieber zwischen einer ersten Extremstellung, in welcher der weitere Ausgang geschlossen und der Wärmeübertragerausgang geöffnet ist, und einer zweiten Extremstellung hin und her bewegbar ist, in welcher der weitere Ausgang geöffnet und der Wärmeübertragerausgang geschlossen ist. Durch den Ventilschieber kann auch bei hohen Drücken eine ausreichende Dichtigkeit gewährleistet werden.

Ein weiteres bevorzugtes Ausführungsbeispiel der Wärmeübertragerventileinrichtung ist dadurch gekennzeichnet, dass in einer weiteren Ventilstellung des Ventilschiebers der weitere Ausgang und der Wärmeübertragerausgang geschlossen sind.

Ein weiteres bevorzugtes Ausführungsbeispiel der Wärmeübertragerventileinrichtung ist dadurch gekennzeichnet, dass in einer weiteren Ventilstellung des Ventilschiebers der weitere Ausgang und der Wärmeübertragerausgang teilweise geöffnet sind.

Ein weiteres bevorzugtes Ausführungsbeispiel der Wärmeübertragerventileinrichtung ist dadurch gekennzeichnet, dass in einer weiteren Ventilstellung des Ventilschiebers der weitere Ausgang und der Wärmeübertragerausgang geöffnet sind.

Ein weiteres bevorzugtes Ausführungsbeispiel der Wärmeübertragerventileinrichtung ist dadurch gekennzeichnet, dass in einer weiteren Ventilstellung des Ventilschiebers der weitere Ausgang geöffnet und der Wärmeübertragerausgang geschlossen ist.

Ein weiteres bevorzugtes Ausführungsbeispiel der Wärmeübertragerventileinrichtung ist dadurch gekennzeichnet, dass in einer weiteren Ventilstellung des Ventilschiebers der Wärmeübertrageausgang geöffnet und der weitere Ausgang geschlossen ist.

Die Erfindung ist weiterhin dadurch gekennzeichnet, dass der Schließkörper durch zwei Lagerringe geführt ist. Die Lagerringe sind vorzugsweise aus Keramik gebildet und jeweils zwischen einem Absatz in dem Ventilgehäuse und einem Sicherungsring in axialer Richtung fixiert.

Ein weiteres bevorzugtes Ausführungsbeispiel der Wärmeübertragerventileinrichtung ist dadurch gekennzeichnet, dass der Schließkörper ein zentrales Durchgangsloch aufweist. Das zentrale Durchgangsloch dient zum Durchführen einer Kolbenstange, durch die der Schließkörper mit einer Antriebseinrichtung gekoppelt ist.

Ein weiteres bevorzugtes Ausführungsbeispiel der Wärmeübertragerventileinrichtung ist dadurch gekennzeichnet, dass der Schließkörper an mindestens einer Stirnseite mehrere Vorsprünge aufweist. Die Vorsprünge erstrecken sich in Bewegungsrichtung des Schließkörpers und dienen dazu, den Schließkörper in dem Ventilgehäuse zu führen.

Ein weiteres bevorzugtes Ausführungsbeispiel der Wärmeübertragerventileinrichtung ist dadurch gekennzeichnet, dass der Schließkörper an beiden Stirnseiten mehrere Vorsprünge aufweist. Dadurch wird auch in den Extremstellungen der Hin- und Herbewegung des Schließkörpers eine stabile Führung des Schließkörpers in dem Ventilgehäuse sichergestellt

Ein weiteres bevorzugtes Ausführungsbeispiel der Wärmeübertragerventileinrichtung ist dadurch gekennzeichnet, dass der Ventilschieber oder Ventilkolben zwischen zwei Federelementen in eine Nulllage vorgespannt ist, in welcher der Eingang verschlossen ist. Wenn sich der Ventilschieber, der auch als Ventilkolben bezeichnet wird, in seiner Nulllage befindet, dann ist die Verbindung zwischen dem Eingang und den Ausgängen durch den Schließkörper unterbrochen. Durch die Federelemente wird eine Fail-Safe-Funktion ermöglicht.

Ein weiteres bevorzugtes Ausführungsbeispiel der Wärmeübertragerventileinrichtung ist dadurch gekennzeichnet, dass der Ventilschieber teilweise aus Keramik gebildet ist. Anstelle von Keramik kann auch Edelstahl verwendet werden. Der Ventilschieber kann teilweise oder vollständig aus Edelstahl gebildet sein.

Ein weiteres bevorzugtes Ausführungsbeispiel der Wärmeübertragerventileinrichtung ist dadurch gekennzeichnet, dass der Ventilschieber einen Druckausgleichskanal aufweist. Dadurch wird das Verschieben des Ventilschiebers in dem Ventilgehäuse erleichtert.

Bei einem Verfahren zum Reinigen einer vorab beschriebenen Wärmeübertragerventileinrichtung wird der Ventilschieber aus einer Ausgangslage einmal oder mehrmals hin und her bewegt. Durch das Verfahren des Ventilschiebers werden abgelagerte Partikel beziehungsweise abgelagertes Kondensat abgeschabt beziehungsweise abgeschält. Dadurch ist im Betrieb des Fahrzeugs eine einwandfreie Funktion gewährleistet. Dieses Reinigungsverfahren kann auch bei oder nach Abstellen des Motors angewendet werden.

Bevorzugt wird die Lage des Ventilschiebers mit Hilfe einer Sensoreinrichtung erfasst. Eine mögliche Verschmutzung des Ventilschiebers wird vorzugsweise durch eine Abweichung eines von der Sensoreinrichtung erfassten Sensorsignals der Lagerückmeldung einer Antriebseinrichtung des Ventilschiebers erfasst.

Bevorzugt wird ein von der Sensoreinrichtung erfasstes Sensorsignal mit einem Referenzsignal verglichen. Bei dem Referenzsignal handelt es sich vorzugsweise um ein elektrisches Ansteuersignal der Antriebseinrichtung des Ventilschiebers.

Die Erfindung betrifft auch ein Abgasrückführsystem mit einer Brennkraftmaschine, insbesondere einem Motor, der beziehungsweise dem an einer Entnahmestelle abgezweigtes und über eine Rückführstelle zurückgeführtes Abgas zugeführt wird. Die oben angegebene Aufgabe ist bei dem Abgasrückführsystem dadurch gelöst, dass zwischen die Entnahmestelle und die Rückführstelle eine vorab beschriebene Wärmeübertragerventileinrichtung geschaltet ist.

Ein bevorzugtes Ausführungsbeispiel des Abgasrückführsystems ist dadurch gekennzeichnet, dass die Wärmeübertragerventileinrichtung mit einer Abgaskühleinrichtung verbunden ist. Die Abgaskühleinrichtung dient dazu, die Temperatur des rückgeführten Abgases abzusenken. Die Wärmeübertragerventileinrichtung kann stoffschlüssig oder mechanisch an die Abgaskühleinrichtung angebunden sein.

Ein weiteres bevorzugtes Ausführungsbeispiel des Abgasrückführsystems ist dadurch gekennzeichnet, dass die Wärmeübertragerventileinrichtung in die Abgaskühleinrichtung integriert ist. Es ist zum Beispiel vorteilhaft, wenn das Gehäuse beziehungsweise die Abströmseite der Wärmeübertragerventileinrichtung direkt den Eintritts- beziehungsweise Austrittsdrffusor der Abgaskühleinrichtung bildet.

Ein weiteres bevorzugtes Ausführungsbeispiel des Abgasrückführsystems ist dadurch gekennzeichnet, dass die Wärmeübertragerventileinrichtung stoffschlüssig mit der Abgaskühleinrichtung verbunden ist. Alternativ kann die Wärmeübertragerventileinrichtung mechanisch mit der Abgaskühleinrichtung verbunden sein.

Ein weiteres bevorzugtes Ausführungsbeispiel des Abgasrückführsystems ist dadurch gekennzeichnet, dass die Wärmeübertragerventileinrichtung einen Bypass aufweist. Der Bypass dient dazu, zum Beispiel bei einem Kaltstart des Motors, das rückgeführte Abgas ungekühlt an der Abgaskühleinrichtung vorbeizuleiten.

Ein weiteres bevorzugtes Ausführungsbeispiel des Abgasrückführsystems ist dadurch gekennzeichnet, dass die Abgaskühleinrichtung einen U-Flow-Kühler umfasst. Der U-Flow-Kühler ist so an die Wärmeübertragerventileinrichtung angeschlossen, dass das zurückgeführte Abgas zum einen ungekühlt am Kühler vorbei durch die Wärmeübertragerventileinrichtung geleitet werden kann. Zum anderen kann das rückgeführte Abgas mittels der Wärmeübertragerventileinrichtung durch den U-Flow-Kühler hindurch geleitet und so abgekühlt rückgeführt werden. Der U-Flow-Kühler liefert den Vorteil, dass ein Bypass entfallen kann.

Ein weiteres bevorzugtes Ausführungsbeispiel des Abgasrückführsystems ist dadurch gekennzeichnet, dass die Wärmeübertragerventileinrichtung, in Strömungsrichtung von der Entnahmestelle zu der Rückführstelle betrachtet, stromaufwärts oder stromabwärts zu der Abgaskühleinrichtung angeordnet ist. Die Wärmeübertragerventileinrichtung kann demzufolge sowohl vor als auch hinter der Abgaskühleinrichtung angeordnet sein.

Ein weiteres bevorzugtes Ausführungsbeispiel des Abgasrückführsystems ist dadurch gekennzeichnet, dass die Wärmeübertragerventileinrichtung einen Hochtemperatur-Abgaskühler und einen Niedertemperatur-Abgaskühler umfasst. Je nach Anwendung kann die zweistufige Abkühlung vorteilhaft sein.

Ein weiteres bevorzugtes Ausführungsbeispiel des Abgasrückführsystems ist dadurch gekennzeichnet, dass die Wärmeübertragerventileinrichtung, in Strömungsrichtung von der Entnahmestelle zu der Rückführstelle betrachtet, stromaufwärts oder stromabwärts zu dem Hochtemperatur-Abgaskühler oder dem Niedertemperatur-Abgaskühler angeordnet ist. Die Wärmeübertragerventileinrichtung kann also vor oder hinter dem Hochtemperatur-Abgaskühler beziehungsweise Niedertemperatur-Abgaskühler angeordnet sein. Die Wärmeübertragerventileinrichtung kann aber auch zwischen dem Hochtemperatur-Abgaskühler und dem Niedertemperatur-Abgaskühler angeordnet sein.

Ein weiteres bevorzugtes Ausführungsbeispiel des Abgasrückführsystems ist dadurch gekennzeichnet, dass das Abgasrückführsystem von einem Hochdruck-Abgasrückführsystem gebildet wird. Das Hochdruck-Abgasrückführsystem kann mit einer einstufigen oder mit einer zweistufigen Abkühlung ausgestattet sein.

Ein weiteres bevorzugtes Ausführungsbeispiel des Abgasrückführsystems ist dadurch gekennzeichnet, dass das Abgasrückführsystem von einem Niederdruck-Abgasrückführsystem gebildet wird. Das Niederdruck-Abgasrückführsystem kann mit einer einstufigen oder mit einer zweistufigen Abkühlung ausgestattet sein.

Bevorzugt sind bei dem Verfahren zur Reinigung der Wärmeübertragungsventileinrichtung der Wärmeübertragerausgang und der Bypassausgang verschlossen. Insbesondere kann während des Reinigungsverfahrens kein Medium, insbesondere kein Abgas oder keine Ladeluft, durch den Wärmeübertragerausgang dem Wärmeübertrager und über den Bypassausgang dem Bypass zugeführt werden.

Bevorzugt sind bei dem Verfahren zur Reinigung der Wärmeübertragungsventileinrichtung der Wärmeübertragerausgang oder der Bypassausgang verschlossen. Insbesondere kann während des Reinigungsverfahrens kein Medium, insbesondere kein Abgas oder keine Ladeluft, durch den Wärmeübertragerausgang dem Wärmeübertrager oder über den Bypassausgang dem Bypass zugeführt werden.

Bevorzugt wird bei dem Verfahren zur Reinigung der Wärmeübertragungsventileinrichtung das Verfahren zum Reinigen gestartet, sobald ein erfasstes Sensorsignal einer Sensoreinrichtung, insbesondere zur Messung einer Reibwiderstandskraft eines Reibwiderstandes zwischen zumindest einem Schließkörpers und zumindest einem Gehäuseführungsabschnitt, mit einem Referenzsignal übereinstimmt.
Insbesondere, wenn das Sensorsignal das Referenzsignal über- und/oder unterschreitet oder mit diesem übereinstimmt, kann das Verfahren zur Reinigung gestartet werden. Insbesondere, wenn das Sensorsignal ein zweites anderes Referenzsignal über- und/oder unterschreitet oder mit diesem übereinstimmt, kann das Verfahren zur Reinigung beendet werden.

Die Erfindung betrifft auch einen Wärmeübertrager, insbesondere einen Abgaswärmeübertrager, mit einer vorab beschriebenen Wärmeübertragerventileinrichtung.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: ein Hochdruck-Abgasrückführsystem mit einer einstufigen Abkühlung, die einen Bypass umfasst;
- Figur 2: ein Hochdruck-Abgasrückführsystem mit einer einstufigen Abkühlung mit einem U-Flow-Kühler;
- Figur 3: ein Hochdruck-Abgasrückführsystem mit einer zweistufigen Abkühlung;
- Figur 4: ein Niederdruck-Abgasrückführsystem mit einer einstufigen Abkühlung, die einen Bypass umfasst;
- Figur 5: ein nicht erfindungsgemäßes Niederdruck-Abgasrückführsystem mit einer einstufigen Abkühlung mit einem U-Flow-Kühler;
- Figur 6: ein Niederdruck-Abgasrückführsystem mit einer zweistufigen Abkühlung;
- Figur 7: eine nicht erfindungsgemäße Wärmeübertragerventileinrichtung im Längsschnitt durch den Ventilschieber;
- Figur 8: einen Schließkörper des Ventilschiebers der Wärmeübertragerventileinrichtung aus Figur 10 gemäß einem ersten Ausführungsbeispiel;
- Figur 9: eine Seitenansicht des Schließkörpers aus Figur 11;
- Figur 10: einen ähnlichen Schließkörper wie in Figur 11 gemäß einem weiteren Ausführungsbeispiel;
- Figur 11: eine Seitenansicht des Schließkörpers aus Figur 13;
- Figur 12: einen ähnlichen Schließkörper wie in den Figuren 11 und 13 gemäß einem weiteren Ausführungsbeispiel;
- Figur 13: eine Seitenansicht des Schließkörpers aus Figur 15,
- Figur 14: eine Wärmeübertragerventileinrichtung gemäß einem weiteren Ausführungsbeispiel im Längsschnitt durch den Ventilschieber und
- Figur 15: eine Wärmeübertragerventileinrichtung, die kein erfindungsgemäßes Ausführungsbeispiel ist im Längsschnitt durch den Ventilschieber.

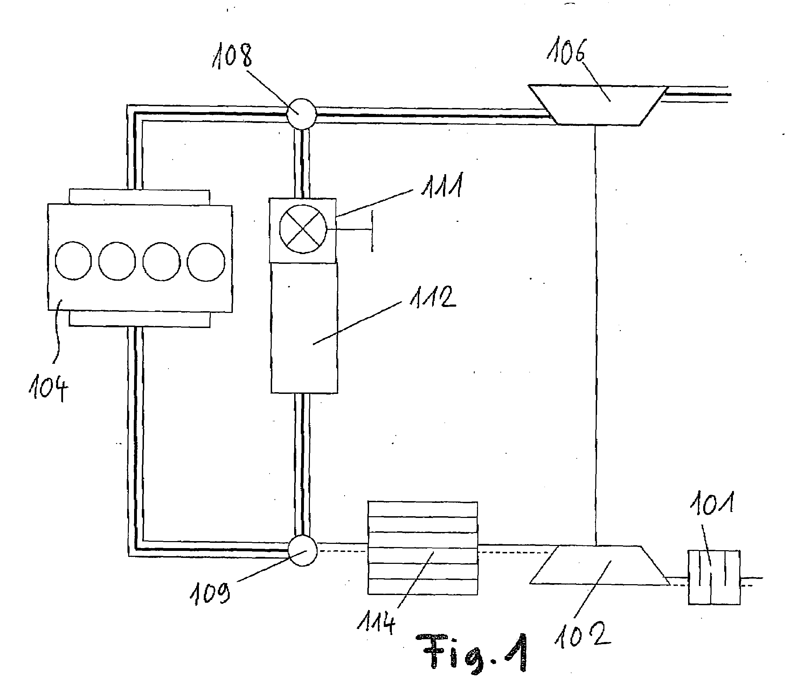

In den Figuren 1 bis 3 sind verschiedene Ausführungsbeispiele eines Hochdruck-Abgasrückführsystems vereinfacht dargestellt. Gleiche Teile sind mit gleichen Bezugszeichen versehen. Die Leistung eines Verbrennungsmotors hängt von Hubraum, Drehzahl und mittlerem Gasdruck ab. Durch eine Aufladung des Motors kann die Füllung erheblich verbessert und damit die Motorleistung gesteigert werden. Das Kraftstoff-Luftgemisch oder die Luft wird ganz oder teilweise außerhalb des Zylinders vorverdichtet. Bei einem Motor mit Abgasturbolader treiben die Abgase die Turbine und diese den Verdichter an. Der Verdichter übernimmt das Ansaugen und liefert dem Motor eine vorverdichtete Frischgasladung. Ein Ladeluftkühler in der Ladeleitung führt die Verdichtungswärme an die Umgebungsluft ab. Dadurch wird die Zylinderfüllung weiter verbessert.

Die Abgasrückführung dient dazu, das Abgas möglichst weit abzukühlen. Das zurückgeführte Abgas nimmt an der Verbrennung in der Brennkraftmaschine nicht mehr teil, erwärmt sich aber. Insgesamt wird durch das rückgeführte Abgas die Temperatur in der Brennkraftmaschine beziehungsweise dem Motor abgesenkt. Durch niedrige Temperaturen im Motor kann die Entstehung von Stickoxiden, die stark von der Temperatur im Motor abhängig ist, reduziert werden.

Das Kraftstoff-Luftgemisch wird über einen Luftfilter 101 von einem Verdichter 102 angesaugt und einem Motor 104 zugeführt. Von dem Motor 104 gelangt das Abgas zu einer Turbine 106, die den Verdichter 102 antreibt. Zwischen dem Motor 104 und der Turbine 106, die auch als Turboladerturbine bezeichnet wird, ist eine Entnahmestelle 108 vorgesehen, die mit einer Rückführstelle 109 in Verbindung steht. Über die Rückführstelle 109 wird das Abgas wieder dem Motor 104 zugeführt. Zwischen der Entnahmestelle 108 und der Rückführstelle 109 ist ein erfindungsgemäßes Wärmeübertragerventil 111, das auch als Kombinationsventil bezeichnet wird, angeordnet. Das Kombinationsventil 111 steht mit einem Abgaskühler 112 in Verbindung, der einen Bypass umfasst. Dieser Bypass ist einteilig mit dem Kühlergehäuse ausgeführt. In einer weiteren nicht dargestellten Ausführung ist der Bypass insbesondere eine separate Rohrleitung, die den Kühler umgeht. Zwischen den Verdichter 102 und die Rückführstelle 109 ist ein Ladeluftkühler 114 geschaltet.

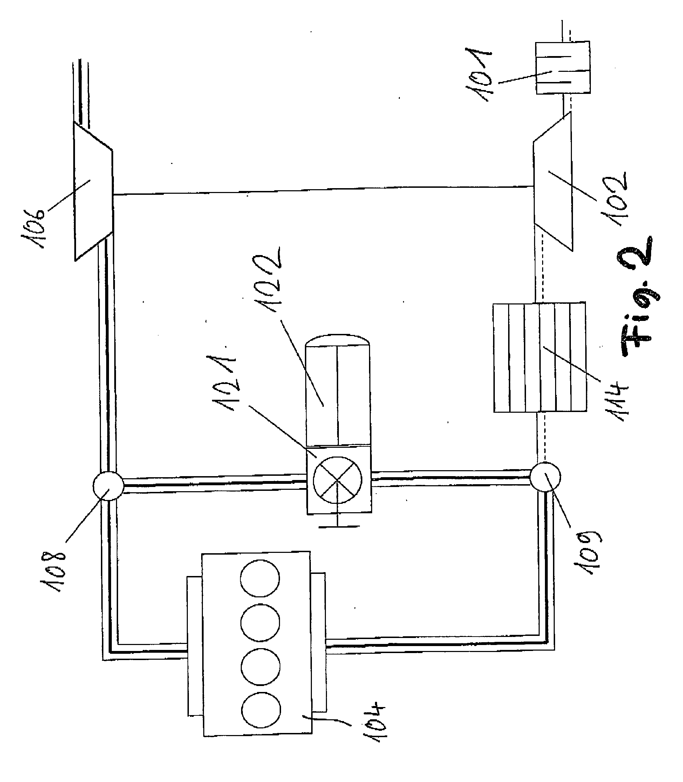

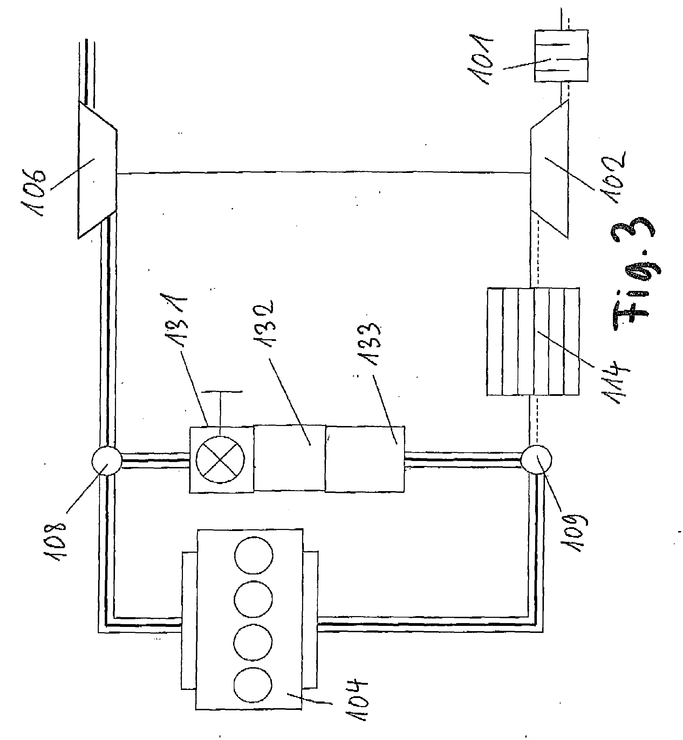

Die in den Figuren 2 und 3 dargestellten Hochdruck-Abgasrückführsysteme ähneln dem in Figur 1 dargestellten Abgasrückführsystem. Zur Bezeichnung gleicher Teile werden gleiche Bezugszeichen verwendet. Um Wiederholungen zu vermeiden, wird auf die vorangegangene Beschreibung der Figur 1 verwiesen. Im Folgenden wird nur auf die Unterschiede zwischen den einzelnen Ausführungsbeispielen eingegangen.

Bei dem in Figur 2 dargestellten Hochdruck-Abgasrückführsystem ist zwischen die Entnahmestelle 108 und die Rückführstelle 109 ein erfindungsgemäßes Wärmeübertragerventil 121 geschaltet, das auch als Kombinationsventil bezeichnet wird. Das Kombinationsventil 121 steht mit einem U-Flow-Kühler in Verbindung. Je nach Schaltstellung des Kombinationsventils 121 gelangt das rückgeführte Abgas entweder direkt durch das Kombinationsventil 121 ungekühlt von der Entnahmestelle 108 zur Rückführstelle 109, oder das rückgeführte Abgas wird mittels des Kombinationsventils in den U-Flow-Kühler 122 geleitet, in dem U-Flow-Kühler 122 gekühlt und gelangt dann erst zur Rückführstelle 109.

Bei dem in Figur 3 dargestellten Hochdruck-Abgasrückführsystem ist zwischen der Entnahmestelle 108 und der Rückführstelle 109 ein Kombinationsventil 131 mit einer zweistufigen Abkühleinrichtung angeordnet, die einen Hochtemperatur-Abgaskühler 132 und einen Niedertemperatur-Abgaskühler 133 umfasst.

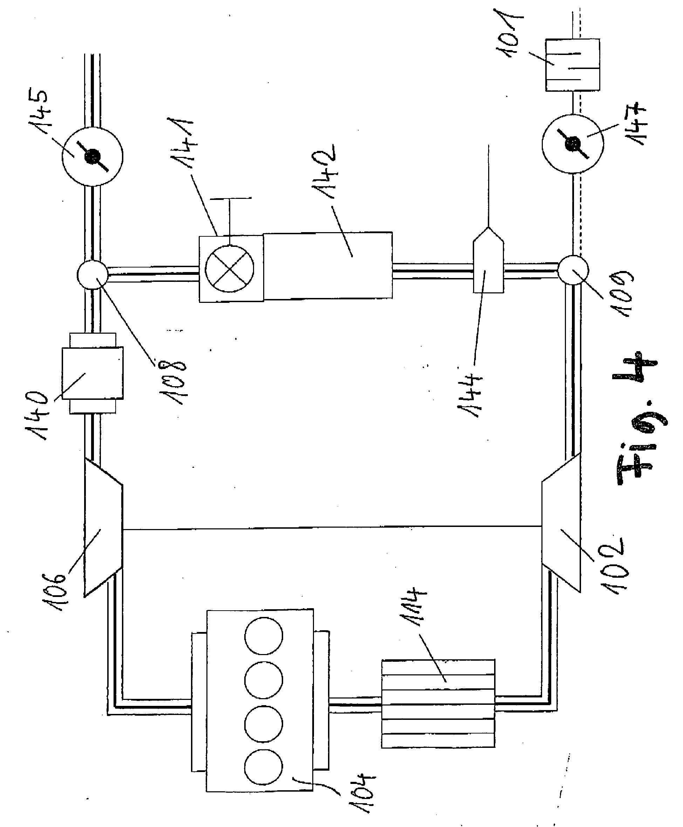

In den Figuren 4 bis 6 sind verschiedene Ausführungsbeispiele eines Niederdruck-Abgasrückführsystems vereinfacht dargestellt. Das Kraftstoff-Luftgemisch wird über einen Luftfilter 101 von einem Verdichter 102 angesaugt und einem Motor 104 zugeführt. Das Abgas des Motors 104 wird in einer Turbine 106 entspannt, die den Verdichter 102 antreibt. Stromabwärts der Turbine 106 ist eine Entnahmestelle 108 angeordnet, die mit einer Rückführstelle 109 in Verbindung steht. Die Rückführstelle 109 ist stromaufwärts des Verdichters 102 angeordnet. Zwischen den Verdichter 102 und den Motor 104 ist ein Ladeluftkühler 114 geschaltet. Zwischen die Turbine 106 und die Entnahmestelle 108 ist ein Dieselpartikelfilter 140 mit Oxidationskatalysator geschaltet. Zwischen die Entnahmestelle 108 und die Rückführstelle 109 ist ein Wärmeübertragerventil 141, das auch als Kombinationsventil bezeichnet wird, geschaltet. Das Kombinationsventil 141 steht mit einem Abgaskühler 142 in Verbindung, der mit einem Bypass ausgestattet ist. Zwischen den Abgaskühler 142 und die Rückführstelle 109 ist ein Kondensatabscheider 144 geschaltet. In Strömungsrichtung im Anschluss an die Entnahmestelle 108 ist ein Abgasgegendruckventil 145 angeordnet. Zwischen die Rückführstelle 109 und den Luftfilter 101 ist eine Ladeluftdrossel 147 geschaltet.

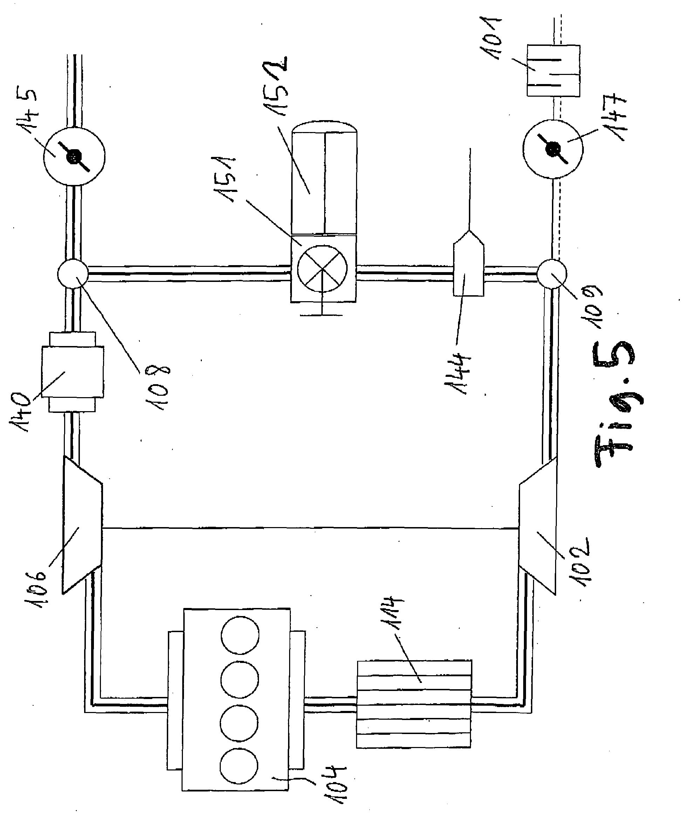

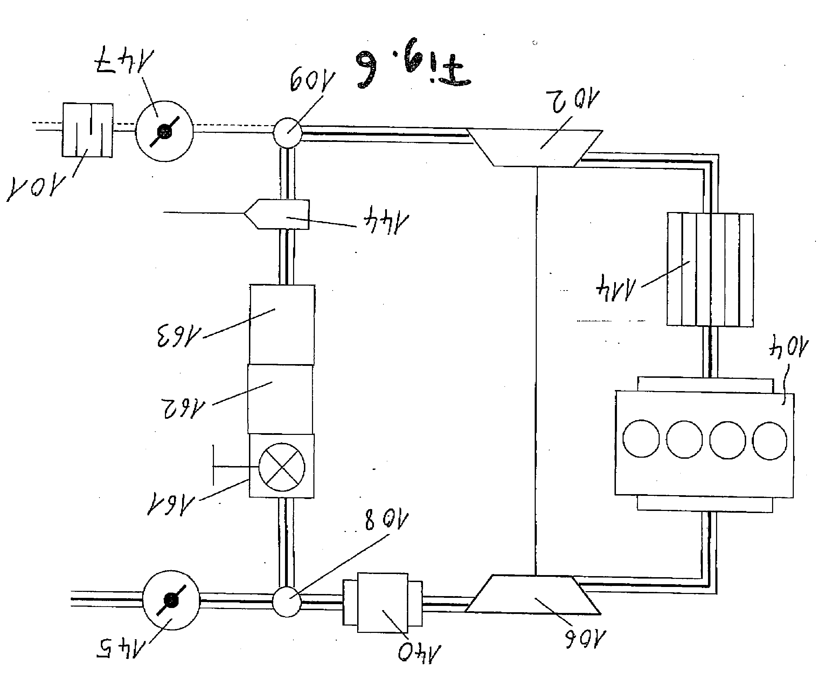

In den Figuren 5 und 6 sind ähnliche Niederdruck-Abgasrückführsysteme wie in Figur 4 dargestellt. Zur Bezeichnung gleicher Teile werden gleiche Bezugszeichen verwendet. Um Wiederholungen zu vermeiden, wird auf die vorangegangene Beschreibung der Figur 4 verwiesen. Im Folgenden wird nur auf die Unterschiede zwischen den einzelnen Ausführungsbeispielen eingegangen.

Bei dem in Figur 5 dargestellten Ausführungsbeispiel ist zwischen die Entnahmestelle 108 und die Rückführstelle 109 ein Wärmeübertragerventil 151, das auch als Kombinationsventil bezeichnet wird, geschaltet. Das Kombinationsventil 151 steht mit einem U-Flow-Kühler 152 in Verbindung. Je nach Schaltstellung des Kombinationsventils 151 gelangt das rückgeführte Abgas entweder direkt durch das Kombinationsventil 151 ungekühlt von der Entnahmestelle 108 zur Rückführstelle 109, oder das rückgeführte Abgas wird mittels des Kombinationsventils in den U-Flow-Kühler 152 geleitet, in dem U-Flow-Kühler 152 gekühlt und gelangt dann erst zur Rückführstelle 109.
Bei dem in Figur 6 dargestellten Ausführungsbeispiel sind zwischen die Entnahmestelle 108 und die Rückführstelle 109 ein Kombinationsventil 161 mit einer zweistufigen Abkühleinrichtung angeordnet, die einen Hochtemperatur-Abgaskühler 162 und einen Niedertemperatur-Abgaskühler 163 umfasst.

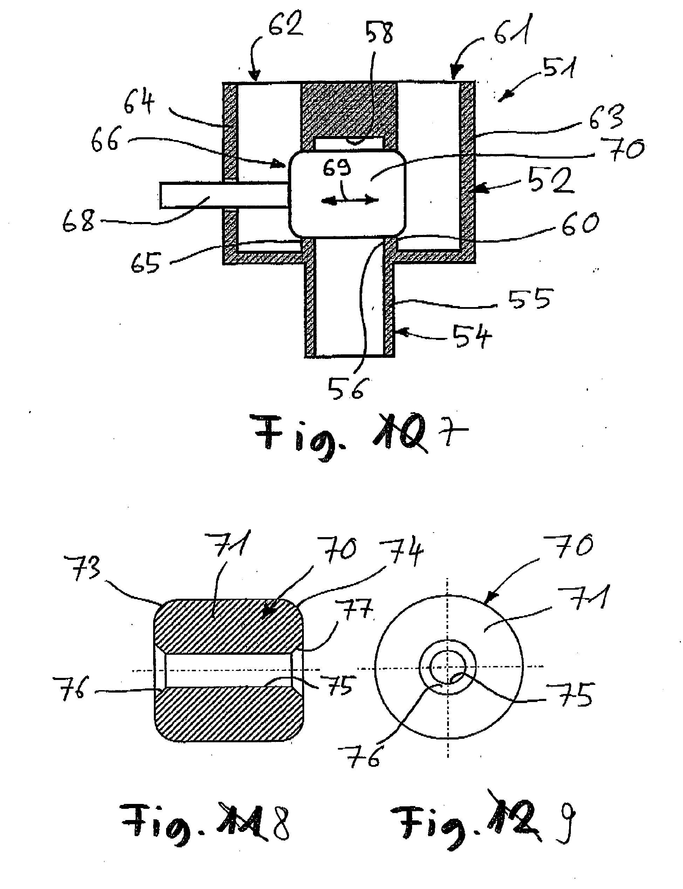

In Figur 7 die kein erfindungsgemäßes Ausführungsbeispiel zeigt, ist eine Wärmeübertragerventileinrichtung 51 dargestellt. Die Wärmeübertragerventileinrichtung 51 umfasst ein Gehäuse 52 mit einem Eingang 54 für ein Fluid. Bei dem Fluid handelt es sich vorzugsweise um Abgas oder Ladeluft. Der Eingang 54 wird von einem Eingangsstutzen 55 gebildet, der im Wesentlichen die Gestalt eines Kreiszylindermantels aufweist, der einstückig mit dem Gehäuse 52, das auch als Ventilgehäuse bezeichnet wird, verbunden ist und eine kreisrunde Eintrittsöffnung 56 umfasst. Der Eintrittsöffnung 56 gegenüberliegend ist in dem Ventilgehäuse 52 eine Ausnehmung 58 ausgespart, deren Funktion später erläutert wird.

Des Weiteren weist das Ventilgehäuse 52 eine Kühleraustrittsöffnung 60 in einem Kühlerausgang 61 auf, der mit einem (nicht dargestellten) Kühler in Verbindung steht. Darüber hinaus weist das Ventilgehäuse 52 einen Bypassausgang 62 auf, der mit einer (nicht dargestellten) Bypassleitung in Verbindung steht, über die Fluid an dem Kühler vorbeigeleitet wird. Der Kühlerausgang 61 wird von einem Kühleraustrittsstutzen 63 gebildet, der einstückig mit dem Ventilgehäuse 52 verbunden ist. Der Bypassausgang 62 wird von einem Bypassaustrittsstutzen 64 gebildet, der ebenfalls einstückig mit dem Ventilgehäuse 52 verbunden und eine Bypassaustrittsöffnung 65 aufweist. Die jeweiligen Querschnitte der Leitungen sind gleich groß.

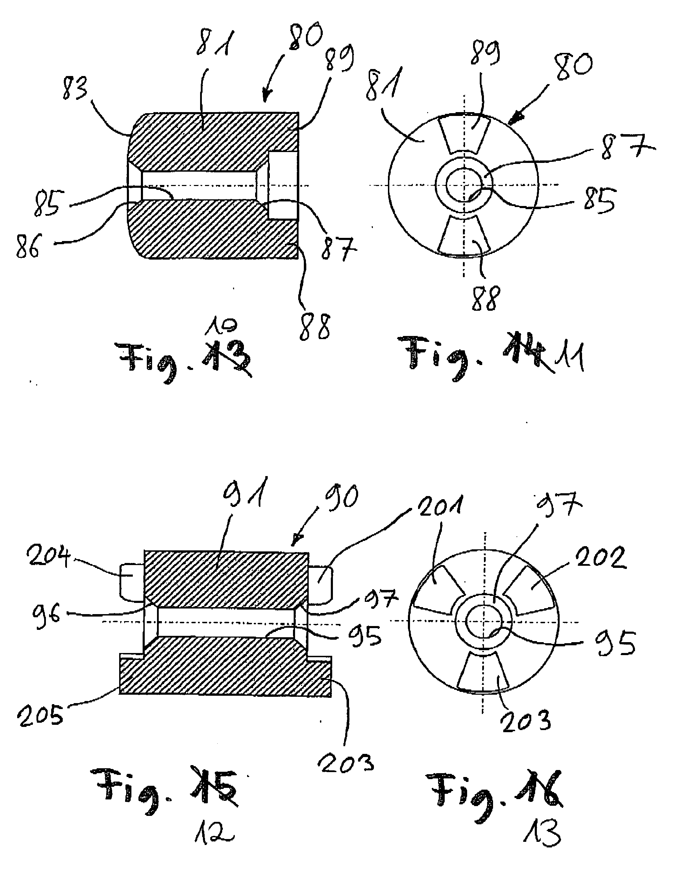

In dem Ventilgehäuse 52 ist ein Ventilschieber 66 hin und her bewegbar geführt. Der Ventilschieber 66 umfasst eine Ventilschieberstange 68, an deren einem Ende ein Schließkörper 70 befestigt ist. Durch die der Eintrittsöffnung 56 gegenüberliegende Ausnehmung 58 in dem Ventilgehäuse 52 ist sichergestellt, dass der Schließkörper 70 in Umfangsrichtung vollständig von dem in dem Eingang 54 vorhandenen Medium umströmt wird. Durch einen Doppelpfeil 69 ist die Hin- und Herbewegung des Schließkörpers 70 angedeutet, die über die Ventilschieberstange 68, die auch als Kolbenstange bezeichnet werden kann, von einer (nicht dargestellten) Antriebseinrichtung auf den Schließkörper 70 übertragen wird, der auch als Kolben bezeichnet wird. In Abhängigkeit von der Stellung des Schließkörpers 70 ist der Eingang 54 mit dem Kühlerausgang 61 oder dem Bypassausgang 62 verbindbar. In der in Figur 10 dargestellten Stellung des Schließkörpers 70 besteht keine Verbindung zwischen dem Eingang 54 und den Ausgängen 61, 62.

In den Figuren 8 und 9 ist der Schließkörper 70 in verschiedenen Ansichten dargestellt. Der Schließkörper 70 umfasst einen Grundkörper 71, der die Gestalt eines geraden Kreiszylinders aufweist. An seinen Stirnseiten ist der Grundkörper 71 jeweils mit einer umlaufenden Rundung 73, 74 versehen. Darüber hinaus weist der Grundkörper 71 ein zentrales Durchgangsloch 75 auf. An den Enden des Durchgangslochs 75 ist jeweils eine Fase 76, 77 vorgesehen.

In den Figuren 10 und 11 ist ein Schließkörper 80 gemäß einem weiteren Ausführungsbeispiel in verschiedenen Ansichten dargestellt. Der Schließkörper 80 umfasst einen Grundkörper 81, der die Gestalt eines geraden Kreiszylinders aufweist. Eine Stirnseite des Grundkörpers 81 ist mit einer umlaufenden Rundung 83 versehen. Die Rundung 83 weist im Querschnitt die Gestalt eines Ellipsenbogens auf. In dem Grundkörper 81 ist ein zentrales Durchgangsloch 85 ausgespart. Die Enden des Durchgangslochs 85 sind jeweils mit einer Fase 86, 87 versehen. An dem Ende des Durchgangslochs 85 mit der Fase 87 sind an der zugehörigen Stirnseite des Grundkörpers 81 zwei Vorsprünge 88, 89 ausgebildet, die sich in axialer Richtung des Grundkörpers 81 erstrecken. Die Vorsprünge 88, 89 werden radial innen und radial außen von Kreisbögen begrenzt. Der radial äußere Kreisbogen der Vorsprünge 88, 89 hat den gleichen Radius wie der Grundkörper 81. Die Vorsprünge 88, 89 dienen dazu, die Führung des Schließkörpers 80 in dem Ventilgehäuse zu verbessern.

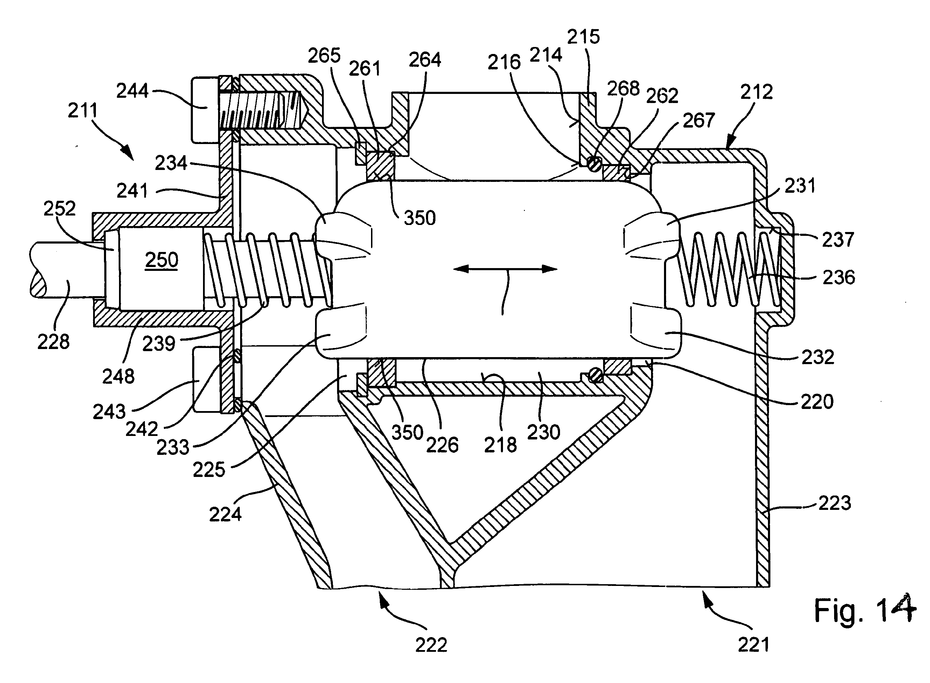

In den Figuren 12 und 13 ist ein Schließkörper 90 gemäß einem weiteren Ausführungsbeispiel in verschiedenen Ansichten dargestellt. Der Schließkörper 90 umfasst einen Grundkörper 91, der die Gestalt eines geraden Kreiszylinders aufweist. In dem Grundkörper 91 ist ein zentrales Durchgangsloch 95 ausgespart, das an den Enden jeweils eine Fase 96, 97 aufweist. An beiden Stirnseiten des Grundkörpers 91 sind jeweils drei Vorsprünge 201, 202, 203; 204, 205 ausgebildet. Die Vorsprünge 201 bis 205 haben die gleiche Gestalt wie die Vorsprünge 88, 89 bei dem in Figur 14 dargestellten Ausführungsbeispiel und dienen ebenfalls zur besseren Führung des Schließkörpers 90 in dem Ventilgehäuse. Die Vorsprünge 201 bis 203 und 204 bis 205 sind über den Umfang des Schließkörpers 90 an dessen Stirnseiten gleichmäßig verteilt angeordnet

Die unter den gegebenen Betriebsbedingungen eines Abgasrückführsystems anfallenden Partikel- und Kondensatablagerungen am Ventilschieber der Wärmeübertragerventileinrichtung können die Funktion der Wärmeübertragerventileinrichtung, die kurz als Ventil bezeichnet wird, beeinflussen. Bevorzugt wird bei einem mit einem Diesel-Verbrennungsverfahren betriebenen Kraftfahrzeug vor der Inbetriebnahme des Motors oder in der Vorglühphase ein Reinigungsverfahren oder ein Reinigungsmechanismus ausgeführt. Bei einem nach dem Ottc Verbrennungsverfahren betriebenen Fahrzeug soll dieses Reinigungsverfahren oder dieser Reinigungsmechanismus ebenfalls vor in Betriebnahme des Motors erfolgen, zum Beispiel bei Inbetriebnahme der Kraftstoffpumpe und/oder anderer Nebenaggregate. Hierbei soll das Stellglied der Wärmeübertragerventileinrichtung, insbesondere der Ventilschieber mit dem Schließkörper, einmal oder mehrmals hin und her bewegt werden und dann wieder in die Ausgangslage, in der das Ventil geschlossen ist, zurückkehren. Durch dieses Verfahren des Stellglieds werden abgelagerte Partikel beziehungsweise abgelagertes Kondensat abgeschabt beziehungsweise abgeschält. Dadurch ist im Betrieb des Fahrzeugs eine einwandfreie Funktion gewährleistet. Der Reinigungsmechanismus beziehungsweise das Reinigungsverfahren kann beziehungsweise können auch bei oder nach Abstellen des Motors erfolgen.

Bei besonders ausgeführten Stellgliedem, die eine Bewegung des Stellglieds ohne Öffnung des Ventilsitzes erlauben, das heißt ohne eine Gasströmung zuzulassen, wie zum Beispiel bei einem vorab beschriebenen Ventilschieber, kann der Reinigungsmechanismus beziehungsweise das Reinigungsverfahren auch während des Betriebs des Motors der Gestalt erfolgen, dass bei Motorbetriebsbedingungen, in denen keine Abgasrückführung erfolgt, das Stellglied sich so hin und her bewegt beziehungsweise vibriert, dass das Ventil trotzdem verschlossen bleibt.

Die Initiierung des Reinigungsmechanismus erfolgt vorzugsweise der Gestalt, dass eine mögliche Verschmutzung durch eine Abweichung eines Sensorsignals der Lagerückmeldung einer Antriebseinrichtung der Wärmeübertragerventileinrichtung bei gegebenem elektrischen Ansteuersignal von einem hinterlegten Sensorsignal bei selbigem Ansteuersignal erkannt wird. Je nach Betriebszustand des Fahrzeugs wird hierauf einer der beiden vorab beschriebenen Reinigungsmechanismen beziehungsweise Reinigungsverfahren durchgeführt.

Bei beiden Reinigungsmechanismen beziehungsweise Reinigungsverfahren wird eine wiederholende Auslenkung des Schließkörpers aus der Nulllage oder Ausgangslage in eine und anschließend über die Nulllage hinaus in die andere Richtung eine Reinigung erreicht. Der Auslenkungsweg hängt von fahrzeugspezifischen Gesichtspunkten, insbesondere der Auslegung der Abgasrückführung, ab. Je nach Größe des Schließkörpers beträgt der Auslenkungsweg nur einen gewissen Prozentsatz der maximal möglichen Auslenkung. Bei dem erstgenannten Reinigungsmechanismus ist es jedoch wesentlich, dass der Schließkörper, der auch als Kolben bezeichnet wird, die eine oder die andere Öffnung zumindest teilweise frei gibt. Bei dem zweiten vorab beschriebenen Reinigungsverfahren beziehungsweise Reinigungsmechanismus ist es wesentlich, dass der Ventilkolben oder Ventilschließkörper die beiden Öffnungen stets verschlossen hält.
Die Verstellgeschwindigkeit kann beim Reinigen langsamer, schneller oder gleich schnell sein wie die Verstellgeschwindigkeit des Schließkörpers unter Normalbedingungen. Entscheidend ist, dass der elektrische Antrieb des Schließkörpers kurzzeitig eine höhere Verstellkraft aufbringen kann als unter Normalbedingungen, um durch die Verschmutzung hervorgerufene, mögliche höhere Reib- beziehungsweise Widerstandkräfte zu überwinden.

In Figur 14 ist eine Wärmeübertragerventileinrichtung 211 gemäß einem weiteren Ausführungsbeispiel dargestellt. Die Wärmeübertragerventileinrichtung 211 umfasst ein Gehäuse 212 mit einem Eingang 214 für ein Fluid. Bei dem Fluid handelt es sich vorzugsweise um Abgas oder Ladeluft. Der Eingang 214 wird von einem Eingangsstutzen 215 gebildet, der im Wesentlichen die Gestalt eines Kreiszylindermantels aufweist, der einstückig mit dem Gehäuse 212, das auch als Ventilgehäuse bezeichnet wird, verbunden ist und eine Eintrittsöffnung 216 umfasst. An der Eintrittsöffnung 216 mündet der Eingang 214 in einen Ringraum 218.

Des Weiteren weist das Ventilgehäuse 212 eine Kühleraustrittsöffnung 220 in einem Kühlerausgang 221 auf, der mit einem (nicht dargestellten) Kühler in Verbindung steht. Darüber hinaus weist das Ventilgehäuse 212 einen Bypassausgang 222 auf, der mit einer (nicht dargestellten) Bypassleitung in Verbindung steht, über die Fluid an dem Kühler vorbeigeleitet wird. Der Kühlerausgang 221 wird von einem Kühleraustrittsstutzen 223 gebildet, der einstückig mit dem Ventilgehäuse 212 verbunden ist. Der Bypassausgang 222 wird von einem Bypassaustrittsstutzen 224 gebildet, der ebenfalls einstückig mit dem Ventilgehäuse 212 verbunden und eine Bypassaustrittsöffnung 225 aufweist. Der Kühlerausgang 221 weist außen einen größeren Querschnitt als der Bypassausgang 222 auf.

In dem Ventilgehäuse 212 ist ein Ventilkolben oder Ventilschieber 226 hin und her bewegbar geführt, wie durch einen Doppelpfeil 229 angedeutet ist. Der Ventilschieber 226 umfasst eine Ventilkolbenstange 228, an deren einem Ende ein Schließkörper 230 befestigt ist. Der Ringraum 218 umgibt den Schließkörper 230. Durch den Ringraum 218 ist sichergestellt, dass der Schließkörper 230 in Umfangsrichtung vollständig von dem in dem Eingang 214 vorhandenen Medium oder Fluid umströmt wird. Der Schließkörper 230 ist über die Ventilschieberstange oder Ventilkolbenstange 228 von einer (nicht dargestellten) Antriebseinrichtung angetrieben. In Abhängigkeit von der Stellung des Schließkörpers 230 ist der Eingang 214 mit dem Kühlerausgang 221 oder dem Bypassausgang 222 verbunden. In der in Figur 14 dargestellten Stellung des Schließkörpers 230 besteht keine Verbindung zwischen dem Eingang 214 und den Ausgängen 221, 222. Diese Stellung des Schließkörpers 230 wird auch als Nulllage bezeichnet.

Der Schließkörper 230 hat die Gestalt eines geraden Kreiszylinders, dessen Stirnseiten jeweils mit einer umlaufenden Rundung versehen. An den Stirnseiten des Schließkörpers 230 sind jeweils drei Vorsprünge 231, 232; 233, 234 ausgebildet, die sich in axialer Richtung des Schließkörpers 230 erstrecken und von denen in Figur 14 nur jeweils zwei Vorsprünge pro Stirnseite sichtbar sind. Die Vorsprünge 231 bis 234 dienen dazu, die Führung des Schließkörpers 230 im Ventilgehäuse 212 zu verbessern, wenn der Schließkörper 230 aus der in Figur 14 dargestellten Nulllage nach rechts oder links bewegt wird. Darüber hinaus ermöglichen die Vorsprünge 231 bis 234 den Durchtritt von Medium oder Fluid vom Eingang 214 zu den Ausgängen 221, 222, wenn der Schließkörper 230 nach rechts oder links bewegt wird.

Zwischen der rechten Stirnseite des Schließkörpers 230 und dem Ventilgehäuse 212 ist eine Feder 236 eingespannt. Ein Ende der Feder 236 liegt an der zugehörigen Stirnseite des Schließkörpers 230 an. Das andere Ende der Feder 236, die als Schraubendruckfeder ausgeführt ist, ist in einer Ausnehmung 237 in dem Gehäuse 212 aufgenommen. Die andere Stirnseite, das heißt in Figur 14 die linke Stirnseite, des Schließkörpers 230 ist durch eine weitere Feder 239 beaufschlagt, die ebenfalls als Schraubendruckfeder ausgeführt ist. Die Schraubendruckfeder 239 ist zwischen dem Schließkörper 230 und dem Ventilgehäuse 212 beziehungsweise einer Gleitlagerbuchse 250 eingespannt, deren Funktion im Folgenden noch erläutert wird. Die Federn 236 und 239 haben die gleiche Federkennlinie und bewirken eine gleich große aber in entgegengesetzter Richtung wirkende Vorspannkraft auf den Schließkörper 230. Durch die Vorspannkräfte der Federn 236, 239 wird der Schließkörper 230 in seine in Figur 14 dargestellte Nulllage vorgespannt. Durch diese Vorspannung in die Nulllage wird eine Fail-Safe-Funktion gewährleistet. Wenn zum Beispiel der Antrieb über den Ventilschieber 226 ausfällt, dann wird durch die von den Federn 236, 239 bewirkte Vorspannung sichergestellt, dass der Schließkörper 230 den Eingang 214 verschließt.

Das Ventilgehäuse 212 ist im Bereich der Ventilkolbenstange oder Ventilschieberstange 228 durch einen Gehäusedeckel 241 verschlossen. Zwischen dem Gehäusedeckel 241 und dem Ventilgehäuse 212 ist eine Dichtung 242 eingespannt. Der Gehäusedeckel 241 ist mit Hilfe von Schrauben 243, 244 an dem Ventilgehäuse 212 befestigt. Außerdem weist der Gehäusedeckel 241 einen Lagerstutzen 248 auf, durch den sich die Ventilschieberstange 228 hindurch erstreckt. Die Ventilschieberstange 228 ist mit Hilfe der Gleitlagerbuchse 250 in dem Lagerstutzen 248 gelagert. Die Gleitlagerbuchse 250 ermöglicht es, dass sich die Ventilschieberstange 228 mit dem Schließkörper 230 in dem Ventilgehäuse 212 hin und her bewegt, wie durch den Doppelpfeil 229 angedeutet ist. Durch einen Dichtring 252, der die Ventilschieberstange 228 am Ende des Lagerstutzens 248 umgibt, wird der Innenraum des Gehäuses 212 abgedichtet.

Der Schließkörper 230 ist in zwei Lagerringen 261, 262 aus Keramik in axialer Richtung verschiebbar gelagert. Der Lagerring 261 ist in axialer Richtung zwischen einem Absatz 264 und einem Sicherungsring 265, der als Sprengring ausgeführt ist, fixiert. Die Lagerringe 261, 262 haben jeweils einen rechteckigen Querschnitt. Der Sicherungsring 265 hat ebenfalls einen rechteckigen Querschnitt. Der Lagerring 262 ist in axialer Richtung zwischen einem Absatz 267 und einem Sicherungsring 268 fixiert, der als Sprengring ausgeführt ist und einen kreisrunden Querschnitt aufweist.

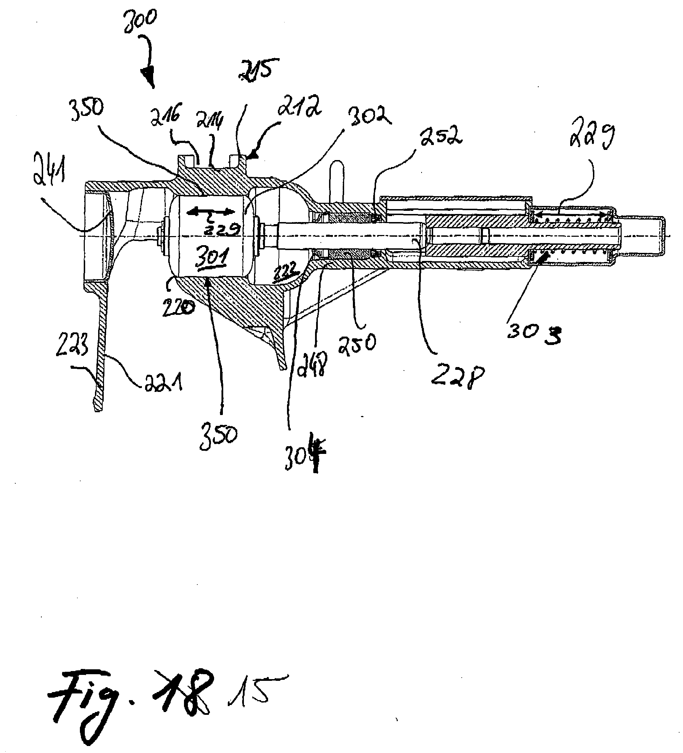

In Figur 15, die kein erfindungsgemäßes Ausführungsbeispiel zeigt, ist eine Wärmeübertragerventileinrichtung 300 dargestellt. Gleiche Merkmale sind mit den gleichen Bezugszeichen wie in den vorherigen Figuren bezeichnet. Insbesondere im Unterschied zu Figur 14 weist die Wärmeübertragerventileinrichtung 300 zumindest eine Feder 303 auf, die als Schraubendruckfeder und/oder Schraubenzugfeder ausgebildet ist. Der Ventilkolben oder die Ventilstange 301 ist im Wesentlichen wie der Ventilkolben oder die Ventilstange 226 ausgebildet. Die Wärmeübertragerventileinrichtung 300 umfasst einen Schließkörper 302, der im Wesentlichen wie der Schließköper 230 ausgebildet ist. Auf der Ventilkolbenstange 228 ist zumindest eine Reinigungsmanschette geordnet zur Reinigungs- und/oder Schmierung der Kolbenstange 228. Das Gehäuse 212 ist insbesondere als Gussgehäuse ausgebildet.

### Figuren 17, 14 und 15

Der Ventilschieber 66, 226, 301 ist als Vollkörper oder zumindest bereichsweise als Hohlkörper ausgebildet.

In den Figuren 1-15 sind bei einer anderen Ausführungsform die Wärmeübertragerventileinrichtung, insbesondere das Gehäuse 52, 212 und/oder der Ventilschieber 66, 226 und/oder insbesondere der Schließköper aus einem Metall und/oder aus einem Sintermaterial wie beispielsweise Keramik und/oder Magnesium und/oder Aluminium und/oder Stahl , wie beispielsweise Edelstahl, und/oder aus einem Kunststoff, insbesondere einem Kunststoff, dessen Schmelztemperatur höher ist als die Temperatur des zu kühlenden Mediums, insbesondere des Abgases, der Ladeluft, des Öls usw. und/oder aus einem Faserverbundwerkstoff ausgebildet.
Das zumindest eine Gehäuse 52, 212 ist beispielsweise aus zumindest einem Blech ausgebildet und weist ein Material, insbesondere Aluminium oder eine Aluminiumlegierung, Kunststoff, Keramik oder einen Faserverbundwerkstoff oder Stahl auf, dessen Schmelztemperatur über, insbesondere deutlich über, der Temperatur des zu kühlenden Mediums wie Abgas, Ladeluft, Öl, Kühlmittel usw. liegt. Das zumindest eine Gehäuse 52, 212 ist mit zumindest einem Kühlmittelkanal, insbesondere mit zwei, drei oder mehr als drei Kühlmittelkanälen versehen, in denen Kühlmittel wie ein wasserhaltiges Fluid und/oder ein Gas wie Luft oder CO2 strömt und das zumindest eine Gehäuse 52, 212 besonders vorteilhaft kühlt, insbesondere unter die Schmelztemperatur des Materials, insbesondere Aluminium oder Aluminiumlegierung, Kunststoff, Magnesium, Keramik oder Faserverbundwerkstoff oder Stahl, kühlt, so dass die Festigkeitseigenschaften wie Steifigkeit; Zug- und/oder Druckfestigkeit, Dauerfestigkeit, Wechselfestigkeit des zumindest einen Gehäuse 52, 212 nicht durch die Temperatur des ungekühlenden Mediums wie Abgas, Ladeluft, Öl, Kühlmittel verschlechtert werden.
Das Gehäuse 52, 212 wird dabei mittels eines urformenden Fertigungsverfahrens, wie Gießen, Spritzgießen usw. und/oder mittels eines umformenden Fertigungsverfahrens, wie beispielsweise Biegen, Pressen, Stanzen und/oder mittels stoffschlüssigen Verbindens, wie Schweißen, Löten, Kleben usw. hergestellt.
Der Schließkörper, insbesondere der Kolben, weist einen nicht näher bezeichneten Kolbendurchmesser auf. Ferner weist der Führungsabschnitt zur Führung des Schließkörpers, insbesondere des Kolbens, einen Führungsabschnittsdurchmesser der Führungsöffnung auf. Die doppelte Spaltbreite ergibt sich bei der Subtraktion des Kolbendurchmessers vom Führungsabschnittsdurchmesser. Die Spaltbreite nimmt insbesondere Werte zwischen 10γm bis 55 γm, insbesondere zwischen 15 γm bis 50 γm, insbesondere zwischen 20 γm bis 40 γm, insbesondere 30 γm bis 35 γm an. Die zumindest eine Schraubendruck- und/oder Schraubenzugfeder 236, 239, 303, insbesondere die zwei oder mehr als zwei Schraubendruck- und/oder Schraubenzugfedern 236, 239, 303, schließen das Ventil im stromlosen Zustand.
Die zumindest eine Schraubendruck- und/oder Schraubenzugfeder 236, 239, 303, insbesondere die zwei oder mehr als zwei Schraubendruck- und/oder Schraubenzugfedern 236, 239, 303, sind im Gausraum oder außerhalb des Gasraums angeordnet. Die zumindest eine Schraubendruck- und/oder Schraubenzugfeder 236, 239, 303, insbesondere die zwei oder mehr als zwei Schraubendruck- und/oder Schraubenzugfedern 236, 239, 303, sind in einer anderen Ausführungsform in der Antriebseinheit angeordnet.
Der zumindest eine Ventilschieber 226 ist in der geschlossenen Stellung, druckentlastet, auf diese Weise ist eine geringere Kraft zur Betätigung des Ventilschiebers erforderlich als aus dem Stand der Technik bekannt. Insbesondere kann die Größe der Antriebseinheit reduziert werden und auf diese Weise Bauraum vorteilhaft eingespart werden. Als Antriebseinheit wird zumindest eine Unterdruckdose die geregelt und in einer anderen Ausführungsform ungeregelt ist und/oder zumindest ein DC-Motor und/oder zumindest ein Linearantrieb, insbesondere zumindest ein Lineardirektantrieb und oder zumindest ein Hubmagnet verwendet.

Die Wärmeübertragerventileinrichtung 121, 131, 141, 151, 161, 211, 300 ist zumindest ein Kombiventil, so dass insbesondere die Abgasrückführung (Abgasrückführfunktion) von rückgeführtem, gekühltem oder zu kühlendem Medium wie Abgas, Ladeluft, Kühlmittel, Öl usw. und ein Bypassen (Bypassfunktion) von Medium wie Abgas, Ladeluft, Kühlmittel, Öl usw. um den zumindest einen Kühler herum, so dass das Medium wie Abgas, Ladeluft, Kühlmittel, Öl usw. nicht gekühlt wird mit der Wärmeübertragerventiteinrichtung 121, 131, 141, 151, 161, 211, 300 gesteuert und/oder geregelt wird.

Die Wärmeübertragerventileinrichtung 121, 131, 141, 151, 161, 211, 300 ist in einer anderen Ausführungsform nur ein Abgasrückführventil, so dass insbesondere die Abgasrückführung (Abgasrückführfunktion) von rückgeführtem, gekühltem oder zu kühlendem Medium wie Abgas, Ladeluft, Kühlmittel, Öl usw. gesteuert und/oder geregelt wird. Die Wärmeübertragerventileinrichtung 121, 131, 141, 151, 161, 211, 300 ist in der geschlossenen Stellung druckentlastet.

Die Wärmeübertragerventileinrichtung 121, 131, 141, 151, 161, 211, 300 ist in einer anderen Ausführungsform nur ein Bypassventil (Bypassfunktion). Rückgeführtes, gekühltes oder zu kühlendes Medium wie Abgas, Ladeluft, Kühlmittel, Öl usw. wird um den zumindest einen Kühler herum bygepasst, so dass das Medium wie Abgas, Ladeluft, Kühlmittel, Öl usw. nicht gekühlt wird. Mit der Wärmeübertragerventileinrichtung 121, 131, 141, 151, 161, 211, 300 wird besonders vorteilhaft die Leckage verringert. Beim Stand der Technik fließt nämlich eine Leckagestrom an Medium wie Abgas, Ladeluft, Kühlmittel, Öl beim Bypassen (Bypassfunktion) aufgrund der schlechten Abdichtung durch den Kühler oder bei der Kühlfunktion durch den Bypass. Dieser Leckagestrom wird bei der Verwendung der Wärmeübertragerventileinrichtung 121, 131, 141, 151, 161, 211, 300 als Bypassventil besonderes vorteilhaft verringert, so dass der Leckagestrom nur 0,5% bis 10%, insbesondere 0,5% bis 7%, insbesondere 0,5% bis 5%, insbesondere 0,5% bis 3%, insbesondere 0,5% bis 2% des in die Wärmeübertragerventileinrichtung 121, 131, 141, 151, 161, 211, 300 einströmenden Mediums wie Abgas, Ladeluft, Kühlmittel, Öl usw. beträgt.

## Patentansprüche

1. Wärmeübertragerventileinrichtung zum Regeln eines Fluidstroms, insbesondere eines Abgas- oder Ladeluftstroms, mit einem Ventilgehäuse (52;212), das einen Eingang (54;214) für den Fluidstrom und einen Wärmeübertragerausgang (61;221) aufweist, durch den einem Wärmeübertrager, insbesondere einem Kühler, in Abhängigkeit von der Stellung eines Ventilkörpers ein mehr oder weniger großer Fluidstrom zugeführt wird,
wobei
das Ventilgehäuse (52;212) einen Ausgang, insbesondere einen Bypassausgang (62;222), aufweist, durch den in Abhängigkeit von der Stellung eines Ventilschiebers (66;226), der hin und her bewegbar in dem Ventilgehäuse (52;212) angeordnet ist, ein mehr oder weniger großer Fluidstrom an dem Wärmeübertrager vorbeileitbar ist, wobei der Ventlischieber (66;226) einen im Wesentlichen kreiszylinderförmigen Schließkörper (70;80;90;230) umfasst , **dadurch gekennzeichnet, dass** der Schließkörper (230) durch zwei Lagerringe (261,262) geführt ist.

2. Wärmeübertragerventileinrichtung nach Anspruch 1, **dadurch gekennzeichnet, dass** der Ventilschieber (66;226) zwischen einer ersten Extremstellung, in welcher der weitere Ausgang (62;222) geschlossen und der Wärmeübertragerausgang (61;221) geöffnet ist, und einer zweiten Extremstellung hin und her bewegbar ist, in welcher der weitere Ausgang (62;222) geöffnet und der Wärmeübertragerausgang (61;221) geschlossen ist.

3. Wärmeübertragerventileinrichtung nach einem der vorhergehenden Ansprüche, **dadurch gekennzeichnet, dass** in einer weiteren Ventilstellung des Ventilschiebers der weitere Ausgang (62;222) und der Wärmeübertragerausgang (61;221) geschlossen sind.

4. Wärmeübertragerventileinrichtung nach einem der vorhergehenden Ansprüche, **dadurch gekennzeichnet, dass** in einer weiteren Ventilstellung des Ventilschiebers der weitere Ausgang (62;222) und der Wärmeübertragerausgang (61;221) zumindest teilweise geöffnet sind.

5. Wärmeübertragerventileinrichtung nach einem der vorhergehenden Ansprüche, **dadurch gekennzeichnet, dass** in einer weiteren Ventilstellung des Ventilschiebers der weitere Ausgang (62;222) und der Wärmeübertragerausgang (61;221) geöffnet sind.

6. Wärmeübertragerventileinrichtung nach Anspruch 2 **dadurch gekennzeichnet, dass** in einer weiteren Ventilstellung des Ventilschiebers der weitere Ausgang (62;222) geöffnet und der Wärmeübertragerausgang (61;221) geschlossen ist.

7. Wärmeübertragerventileinrichtung nach Anspruch 2 **dadurch gekennzeichnet, dass** in einer weiteren Ventilstellung des Ventilschiebers der Wärmeübertragerausgang (61;221) geöffnet und der weitere Ausgang (62;222) geschlossen ist.

8. Wärmeübertragerventileinrichtung nach Anspruch 1 **dadurch gekennzeichnet, dass** der Schließkörper (70;80;90;230) ein zentrales Durchgangsloch (75;85;95) aufweist.

9. Wärmeübertragerventileinrichtung nach Anspruch 8 , **dadurch gekennzeichnet, dass** der Schließkörper (80;90,230) an mindestens einer Stirnseite mehrere Vorsprünge (88,89;201-203;231,232) aufweist.

10. Wärmeübertragerventileinrichtung nach einem der Ansprüche 1 oder 8 bis 9 bis 10, **dadurch gekennzeichnet, dass** der Schließkörper (90;230) an beiden Stirnseiten mehrere Vorsprünge (201-205;231-234) aufweist.

11. Wärmeübertragerventileinrichtung nach einem der Ansprüche 1 oder 8 bis 10 , **dadurch gekennzeichnet, dass** der Ventilschieber (226) mittels zumindest eines Federelements (236,239, 303), insbesondere zwischen zwei Federelementen (236,239), in eine Nulllage vorgespannt ist, in welcher der Eingang (214) verschlossen ist.

12. Wärmeübertragerventileinrichtung nach einem der vorhergehenden Ansprüche, **dadurch gekennzeichnet, dass** der Ventilschieber (66) zumindest teilweise aus Keramik und/oder Stahl gebildet ist.

13. Wärmeübertragerventileinrichtung nach einem der vorhergehenden Ansprüche, **dadurch gekennzeichnet, dass** das Ventilgehäuse (452) zumindest teilweise aus Keramik und/oder Stahl gebildet ist.

14. Wärmeübertrager, insbesondere Abgaswärmeübertrager, mit einer Wärmeübertragerventileinrichtung nach einem der Ansprüche 1 bis 13.

15. Abgasrückführsystem mit einer Brennkraftmaschine, insbesondere einem Motor, der beziehungsweise dem an einer Entnahmestelle (108) abgezweigtes und über eine Rückführstelle (109) zurückgeführtes Abgas zugeführt wird, **dadurch gekennzeichnet, dass** zwischen die Entnahmestelle (108) und die Rückführstelle (109) eine Wärmeübertragerventileinrichtung (111,121,131,141,151,161) nach einem der Ansprüche 1 bis 13 geschaltet ist.

16. Abgasrückführsystem nach Anspruch 15, **dadurch gekennzeichnet, dass** die Wärmeübertragerventileinrichtung (111,121,131,141,151,161) in die Abgaskühleinrichtung (112,122,132,133,142,152,162,163) integriert ist.

17. Abgasrückführsystem nach einem der Ansprüche 15 oder 16, **dadurch gekennzeichnet**, das die Wärmeübertragerventileinrichtung (111,121,131,141,151.161) stoffschlüssig mit der Abgaskühleinrichtung (112,122,132,133,142,152,162,163) verbunden ist.

18. Abgasrückführsystem nach einem der Ansprüche 15 bis 17, **dadurch gekennzeichnet, dass** die Abgaskühleinrichtung (112,132,133,142;162,163) einen Bypass aufweist.

19. Abgasrückführsystem nach einem der Ansprüche 15 bis 18 **dadurch gekennzeichnet, dass** die Abgaskühleinrichtung (122;152) einen U-Flow-Kühler umfasst.

20. Abgasrückführsystem nach einem der Ansprüche 15 bis 19, **dadurch gekennzeichnet, dass** die Wärmeübertragerventileinrichtung (111,121,131,141,151,161), in Strömungsrichtung von der Entnahmestelle (108) zu der Rückführstelle (109) betrachtet, stromaufwärts zu der Abgaskühleinrichtung (112,122,132,133,142,152,162,163) angeordnet ist.

21. Abgasrückführsystem nach einem der Ansprüche 15 bis 19, **dadurch gekennzeichnet, dass** die Wärmeübertragerventileinrichtung (111,121,131,141,151,161), in Strömungsrichtung von der Entnahmestelle (108) zu der Rückführstelle (109) betrachtet, stromabwärts zu der Abgaskühleinrichtung (112,122,132,133,142,152,162,163) angeordnet ist.

22. Abgasrückführsystem nach einem der Ansprüche 15 bis 16, **dadurch gekennzeichnet, dass** die Wärmeübertragerventileinrichtung (131,161) einen Hochtemperatur-Abgaskühler (132,162) und einen Niedertemperatur-Abgaskühler (133,163) umfasst.

23. Abgasrückführsystem nach Anspruch 22, **dadurch gekennzeichnet, dass** die Wärmeübertragerventileinrichtung (131,161), in Strömungsrichtung von der Entnahmestelle (108) zu der Rückführstelle (109) betrachtet, stromaufwärts oder stromabwärts zu dem Hochtemperatur-Abgaskühler (132,162) oder dem Niederdruckabgaskühler (133,163) angeordnet ist.

24. Abgasrückführsystem nach einem der Ansprüche 15 bis 23, **dadurch gekennzeichnet, dass** das Abgasrückführsystem von einem Hochdruck-Abgasrückführsystem gebildet wird.

25. Abgasrückführsystem nach einem der Ansprüche 15 bis 23, **dadurch gekennzeichnet, dass** das Abgasrückführsystem von einem Niederdruckabgasrückführsystem gebildet wird.

## Claims

1. A heat exchanger valve system for regulating a fluid flow, in particular an exhaust gas or charge air flow, comprising a valve housing (52; 212), which has an inlet (54; 214) for the fluid flow and a heat exchanger outlet (61; 221), through which a generally large fluid flow is supplied to a heat exchanger, in particular a cooler, depending on the position of a valve member,
the valve housing (52; 212) comprising an outlet, in particular a bypass outlet (62; 222), through which a generally large fluid flow can be conducted past the heat exchanger, depending on the position of a valve gate (66; 226), which is disposed so as to be movable back and forth in the valve housing (52; 212),
the valve gate (66; 226) comprising a substantially circular cylindrical closing member (70; 80; 90; 230),
**characterized in that** the closing member (230) is guided by two bearing rings (261, 262).

2. The heat exchanger valve system according to claim 1, **characterized in that** the valve gate (66; 226) can be moved back and forth between a first extreme position, in which the further outlet (62; 222) is closed and the heat exchanger outlet (61; 221) is open, and a second extreme position, in which the further outlet (62; 222) is open and the heat exchanger outlet (61; 221) is closed.

3. A heat exchanger valve system according to any one of the preceding claims, **characterized in that** the further outlet (62; 222) and the heat exchanger outlet (61; 221) are closed in a further valve position of the valve gate.

4. A heat exchanger valve system according to any one of the preceding claims, **characterized in that** the further outlet (62; 222) and the heat exchanger outlet (61; 221) are at least partially open in a further valve position of the valve gate.

5. A heat exchanger valve system according to any one of the preceding claims, **characterized in that** the further outlet (62; 222) and the heat exchanger outlet (61; 221) are open in a further valve position of the valve gate.

6. The heat exchanger valve system according to claim 2, **characterized in that** the further outlet (62; 222) is open and the heat exchanger outlet (61; 221) is closed in a further valve position of the valve gate.

7. The heat exchanger valve system according to claim 2, **characterized in that** the heat exchanger outlet (61; 221) is open and the further outlet (62; 222) is closed in a further valve position of the valve slide.

8. The heat exchanger valve system according to claim 1, **characterized in that** the closing member (70; 80; 90; 230) has a central through-hole (75; 85; 95).

9. The heat exchanger valve system according to claim 8, **characterized in that** the closing member (80; 90; 230) comprises a plurality of projections (88, 89; 201-203; 231, 232) on at least one end face.

10. A heat exchanger valve system according to any one of claims 1 or 8 to 9, **characterized in that** the closing member (90; 230) comprises a plurality of projections (201-205; 231-234) on both end faces.

11. A heat exchanger valve system according to any one of claims 1 or 8 to 10, **characterized in that** the valve gate (226) is prestressed in a zero position, in which the inlet (214) is closed, by means of at least one spring element (236, 239, 303), in particular between two spring elements (236, 239).

12. A heat exchanger valve system according to any one of the preceding claims, **characterized in that** the valve gate (66) at least partially comprises ceramic material and/or steel.

13. A heat exchanger valve system according to any one of the preceding claims, **characterized in that** the valve housing (52) at least partially comprises ceramic material and/or steel.

14. A heat exchanger, in particular an exhaust gas heat exchanger, comprising a heat exchanger valve system according to any one of claims 1 to 13.

15. An exhaust gas recirculation system comprising an internal combustion engine, in particular an engine, which is supplied exhaust gas that is branched off at a withdrawal point (108) and recirculated by way of a recirculation point (109), **characterized in that** a heat exchanger valve system (111, 121, 131, 141, 151, 161) according to any one of claims 1 to 13 is connected between the withdrawal point (108) and the recirculation point (109).

16. The exhaust gas recirculation system according to claim 15, **characterized in that** the heat exchanger valve system (111, 121, 131, 141, 151, 161) is integrated in the exhaust gas cooling system (112, 122, 132, 133, 142, 152, 162, 163).

17. The exhaust gas recirculation system according to either claim 15 or 16, **characterized in that** the heat exchanger valve system (111, 121, 131, 141, 151, 161) is bonded to the exhaust gas cooling system (112, 122, 132, 133, 142, 152, 162, 163).

18. An exhaust gas recirculation system according to any one of claims 15 to 17, **characterized in that** the exhaust gas cooling system (112, 132, 133, 142; 162, 163) comprises a bypass.

19. An exhaust gas recirculation system according to any one of claims 15 to 18, **characterized in that** the exhaust gas cooling system (122; 152) comprises a U-flow cooler.

20. An exhaust gas recirculation system according to any one of claims 15 to 19, **characterized in that** the heat exchanger valve system (111, 121, 131, 141, 151, 161), as viewed in the flow direction from the withdrawal point (108) to the recirculation point (109), is disposed upstream of the exhaust gas cooling system (112, 122, 132, 133, 142, 152, 162, 163).

21. An exhaust gas recirculation system according to any one of claims 15 to 19, **characterized in that** the heat exchanger valve system (111, 121, 131, 141, 151, 161), as viewed in the flow direction from the withdrawal point (108) to the recirculation point (109), is disposed downstream of the exhaust gas cooling system (112, 122, 132, 133, 142, 152, 162, 163).

22. An exhaust gas recirculation system according to any one of claims 15 to 21, **characterized in that** the heat exchanger valve system (131, 161) comprises a high-temperature exhaust gas cooler (132, 162) and a low-temperature exhaust gas cooler (133, 163).

23. The exhaust gas recirculation system according to claim 22, **characterized in that** the heat exchanger valve system (131, 161), as viewed in the flow direction from the withdrawal point (108) to the recirculation point (109), is disposed upstream or downstream of the high-temperature exhaust gas cooler (132, 162) or the low-temperature exhaust gas cooler (133, 163).

24. An exhaust gas recirculation system according to any one of claims 15 to 23, **characterized in that** the exhaust gas recirculation system is formed by a highpressure exhaust gas recirculation system.

25. An exhaust gas recirculation system according to any one of claims 15 to 23, **characterized in that** the exhaust gas recirculation system is formed by a low-pressure exhaust gas recirculation system.

## Revendications

1. Dispositif de soupape d'échangeur de chaleur servant à réguler un flux de fluide, en particulier un flux de gaz d'échappement ou d'air de suralimentation, comprenant une cage de soupape (52 ; 212) qui présente une entrée (54 ; 214) pour le flux de fluide et une sortie d'échangeur de chaleur (61 ; 221) à travers laquelle un flux de fluide plus ou moins important est fourni à un échangeur de chaleur, en particulier à un refroidisseur, en fonction de la position d'un corps de soupape,
où la cage de soupape (52 ; 212) présente une sortie, en particulier une sortie de dérivation (62 ; 222) à travers laquelle un flux de fluide plus ou moins important peut être dirigé en passant devant l'échangeur de chaleur, en fonction de la position d'un tiroir de soupape (66 ; 226) qui est disposé en étant mobile en va-et-vient dans la cage de soupape (52 ; 212), où le tiroir de soupape (66 ; 226) présente un corps de fermeture (70 ; 80 ; 90 ; 230) sensiblement de forme cylindrique circulaire, **caractérisé en ce que** le corps de fermeture (230) est guidé par deux bagues de roulement (261, 262).

2. Dispositif de soupape d'échangeur de chaleur selon la revendication 1, **caractérisé en ce que** le tiroir de soupape (66 ; 226) est mobile en va-et-vient entre une première position extrême dans laquelle l'autre sortie (62 ; 222) est fermée et la sortie d'échangeur de chaleur (61 ; 221) ouverte, et une deuxième position extrême dans laquelle l'autre sortie (62 ; 222) est ouverte et la sortie d'échangeur de chaleur (61 ; 221) fermée.

3. Dispositif de soupape d'échangeur de chaleur selon l'une ou l'autre des revendications précédentes, **caractérisé en ce que**, dans une autre position du tiroir de la soupape, l'autre sortie (62 ; 222) et la sortie d'échangeur de chaleur (61 ; 221) sont fermées.

4. Dispositif de soupape d'échangeur de chaleur selon l'une quelconque des revendications précédentes, **caractérisé en ce que**, dans une autre position du tiroir de la soupape, l'autre sortie (62 ; 222) et la sortie d'échangeur de chaleur (61 ; 221) sont au moins partiellement ouvertes.

5. Dispositif de soupape d'échangeur de chaleur selon l'une quelconque des revendications précédentes, **caractérisé en ce que**, dans une autre position du tiroir de la soupape, l'autre sortie (62 ; 222) et la sortie d'échangeur de chaleur (61 ; 221) sont ouvertes.

6. Dispositif de soupape d'échangeur de chaleur selon la revendication 2, **caractérisé en ce que**, dans une autre position du tiroir de la soupape, l'autre sortie (62 ; 222) est ouverte et la sortie d'échangeur de chaleur (61 ; 221) fermée.

7. Dispositif de soupape d'échangeur de chaleur selon la revendication 2, **caractérisé en ce que**, dans une autre position du tiroir de la soupape, la sortie d'échangeur de chaleur (61 ; 221) est ouverte et l'autre sortie (62 ; 222) fermée.

8. Dispositif de soupape d'échangeur de chaleur selon la revendication 1, **caractérisé en ce que** le corps de fermeture (70 ; 80 ; 90 ; 230) présente un trou de passage central (75 ; 85 ; 95).

9. Dispositif de soupape d'échangeur de chaleur selon la revendication 8, **caractérisé en ce que** le corps de fermeture (80 ; 90 ; 230) présente plusieurs parties saillantes (88, 89 ; 201 - 203 ; 231, 232) sur au moins un côté frontal.

10. Dispositif de soupape d'échangeur de chaleur selon l'une des revendications 1, 8 ou 9, **caractérisé en ce que** le corps de fermeture (90 ; 230) présente plusieurs parties saillantes (201 - 205 ; 231 - 234) au niveau des deux côtés frontaux.

11. Dispositif de soupape d'échangeur de chaleur selon l'une des revendications 1 ou 8 à 10, **caractérisé en ce que** le tiroir de soupape (226) est asservi en position neutre, au moyen d'au moins un élément à ressort (236, 239, 303), en particulier entre deux éléments à ressort (236, 239), position neutre dans laquelle l'entrée (214) est fermée.

12. Dispositif de soupape d'échangeur de chaleur selon l'une quelconque des revendications précédentes, **caractérisé en ce que** le tiroir de soupape (66) est au moins partiellement réalisé en céramique et / ou en acier.

13. Dispositif de soupape d'échangeur de chaleur selon l'une quelconque des revendications précédentes, **caractérisé en ce que** la cage de soupape (52) est au moins partiellement réalisée en céramique et / ou en acier.

14. Echangeur de chaleur, en particulier échangeur de chaleur de gaz d'échappement, comprenant un dispositif de soupape d'échangeur de chaleur selon l'une quelconque des revendications 1 à 13.

15. Système de recyclage des gaz d'échappement associé à un moteur à combustion interne, en particulier un moteur thermique auquel sont fournis, à l'un ou à l'autre, des gaz d'échappement déviés au niveau d'un point de collecte (108) et recyclés via un point de recyclage (109), **caractérisé en ce qu'**un dispositif de soupape d'échangeur de chaleur (111, 121, 131, 141, 151, 161) est monté selon l'une quelconque des revendications 1 à 13, entre le point de collecte (108) et le point de recyclage (109).

16. Système de recyclage des gaz d'échappement selon la revendication 15, **caractérisé en ce que** le dispositif de soupape d'échangeur de chaleur (111, 121, 131, 141, 151, 161) est intégré dans le dispositif de refroidissement des gaz d'échappement (112, 122, 132, 133, 142, 152, 162, 163).

17. Système de recyclage des gaz d'échappement selon l'une des revendications 15 ou 16, **caractérisé en ce que** le dispositif de soupape d'échangeur de chaleur (111, 121, 131, 141, 151, 161) est relié, par continuité de matière, au dispositif de refroidissement des gaz d'échappement (112, 122, 132, 133, 142, 152, 162, 163).

18. Système de recyclage des gaz d'échappement selon l'une quelconque des revendications 15 à 17, **caractérisé en ce que** le dispositif de refroidissement des gaz d'échappement (112, 132, 133, 142 ; 162, 163) présente une dérivation.

19. Système de recyclage des gaz d'échappement selon l'une quelconque des revendications 15 à 18, **caractérisé en ce que** le dispositif de refroidissement des gaz d'échappement (122 ; 152) comprend un refroidisseur à écoulement en U.

20. Système de recyclage des gaz d'échappement selon l'une quelconque des revendications 15 à 19, **caractérisé en ce que** le dispositif de soupape d'échangeur de chaleur (111, 121, 131, 141, 151, 161), vu dans la direction d'écoulement à partir du point de collecte (108) vers le point de recyclage (109), est disposé en amont du dispositif de refroidissement des gaz d'échappement (112, 122, 132, 133, 142, 152, 162, 163).

21. Système de recyclage des gaz d'échappement selon l'une quelconque des revendications 15 à 19, **caractérisé en ce que** le dispositif de soupape d'échangeur de chaleur (111, 121, 131, 141, 151, 161), vu dans la direction d'écoulement à partir du point de collecte (108) vers le point de recyclage (109), est disposé en aval du dispositif de refroidissement des gaz d'échappement (112, 122, 132, 133, 142, 152, 162, 163).

22. Système de recyclage des gaz d'échappement selon l'une quelconque des revendications 15 à 21, **caractérisé en ce que** le dispositif de soupape d'échangeur de chaleur (131, 161) présente un refroidisseur des gaz d'échappement à haute température (132, 162) et un refroidisseur des gaz d'échappement à basse température (133, 163).

23. Système de recyclage des gaz d'échappement selon la revendication 22, **caractérisé en ce que** le dispositif de soupape d'échangeur de chaleur (131, 161), vu dans la direction d'écoulement à partir du point de collecte (108) vers le point de recyclage (109), est disposé en amont ou en aval du refroidisseur de gaz d'échappement à haute température (132, 162) ou du refroidisseur de gaz d'échappement à basse température (133, 163).

24. Système de recyclage des gaz d'échappement selon l'une quelconque des revendications 15 à 23, **caractérisé en ce que** le système de recyclage des gaz d'échappement est formé par un système de recyclage des gaz d'échappement à haute pression.

25. Système de recyclage des gaz d'échappement selon l'une quelconque des revendications 15 à 23, **caractérisé en ce que** le système de recyclage des gaz d'échappement est formé par un système de recyclage des gaz d'échappement à basse pression.
